Europäisches Patentamt

European Patent Office

Office européen des brevets

(19)

(11) Veröffentlichungsnummer: **0 313 546 B1**

# EUROPÄISCHE PATENTSCHRIFT

(45) Veröffentlichungstag der Patentschrift: **22.12.93**

(51) Int. Cl.5: **G01N 33/00**, G01N 27/416

(21) Anmeldenummer: **88890250.9**

(22) Anmeldetag: **27.09.88**

(54) **Verfahren zum Kalibrieren eines Messgerätes und Anordnung zur Durchführung des Verfahrens.**

(30) Priorität: **23.10.87 AT 2816/87**

(43) Veröffentlichungstag der Anmeldung:
**26.04.89 Patentblatt 89/17**

(45) Bekanntmachung des Hinweises auf die
Patenterteilung:
**22.12.93 Patentblatt 93/51**

(84) Benannte Vertragsstaaten:
**DE FR GB**

(56) Entgegenhaltungen:
**EP-A- 0 031 149**
**EP-A- 0 031 786**
**DE-A- 2 727 140**
**US-A- 3 681 255**
**US-A- 4 163 734**

(73) Patentinhaber: **AVL Medical Instruments AG**
**Stettemerstrasse 28**
**CH-8207 Schaffhausen(CH)**

(72) Erfinder: **Kroneis, Herbert, Dipl.-Ing. Dr.**
**Jakob Gschiel-Gasse 8/21**
**A-8052 Graz(AT)**
Erfinder: **Marsoner, Hermann, Dipl.-Ing. Dr.**
**Roseggersiedlung 2**
**A-8153 Steinberg(AT)**
Erfinder: **Noormofidi, Tagni, Dipl.-Ing.**
**Mautscha 78**
**A-8054 Graz(AT)**

(74) Vertreter: **Krause, Walter, Dr. Dipl.-Ing. et al**
**Postfach 200**
**A-1014 Wien (AT)**

**Beschreibung**

Die Erfindung betrifft ein Verfahren zum Kalibrieren eines Meßgerätes, welches zumindest den pH- und den $pCO_2$-Wert in wäßrigen Medien bestimmt und eine Anordnung zur Durchführung des Verfahrens.

Bedingt durch die gegenseitige Abhängigkeit von pH- und $pCO_2$-Werten wäßriger Medien besteht häufig die analytische Aufgabe, diese beiden Größen gemeinsam zu messen. Besonderes Interesse dafür besteht bei biologischen Systemen, in welchen $CO_2$ als Stoffwechselprodukt und der pH-Wert als in relativ engen Grenzen konstant gehaltene Zustandsgröße für Organismen zu bewerten ist.

Eine solche analytische Aufgabe ist beispielsweise die Blutgasanalyse, bei der die Werte für pH, $pCO_2$, sowie $pO_2$ in Vollblut ermittelt werden. Im folgenden wird das neue Kalibrierverfahren am Beispiel der Blutgasanalyse beschrieben, ist aber keineswegs auf diesen Meßzweck eingeschränkt.

Als Kalibrierverfahren in der Blutgasanalyse sind derzeit verschiedene Methoden in Gebrauch. So können die Gassensoren entweder durch exakt eingestellte Gasgemische oder durch Flüssigkeiten, welche mit Gasgemischen bei konstanter Temperatur äquilibriert sind, kalibriert werden. In allen Fällen bedürfen die Meß- bzw. Analysengeräte einer Gasversorgung, wobei sie entweder mit Präzisionsgamischanlagen entsprechend AT-PS 300.423 ausgestattet sein können und an beispielweise Preßluft- und $CO_2$-Flaschen angeschlossen werden, oder entsprechende, bereits vorgemischte Präzisionsgasgemische werden direkt aus bereitgestellten Gasflaschen entnommen.

Geräte mit Gasmischanlagen können statt mit Preßluft auch mit Raumluft betrieben werden. Ein Anschluß an eine $CO_2$-Versorgung bleibt aber erforderlich.

Die Kalibrierpartialdrucke für $CO_2$ und $O_2$ sind in der Regel auf deren Erwartungswerte in der Probe abgestimmt und liegen in der Blutgasanalyse für $CO_2$ um 40 bzw. 80 mmHg (5,33 bzw. 10,67 kPa) und für $O_2$ bei 0 bzw. 140 bis 160 mmHg (O bzw. 18,67 bis 21,33 kPa).

Ergänzend dazu können für Kontrollzwecke in entsprechend gasdichte Behälter eingeschweißte mit Präzisionsgasen äquilibrierte Flüssigkeiten herangezogen werden. Diese Systeme haben sich für Kalibrierzwecke jedoch nicht durchgesetzt und sind eher für den einmaligen Gebrauch bestimmt, da nach dem Öffnen des Gebindes die Gaspartialdrucke relativ rasch gegen den Luftwert hin verfälscht werden.

Den bekannten Kalibrierverfahren haften somit verschiedene Nachteile an, wie: die erforderliche Bereitstellung von Gasanschlüssen, hohe Kosten von Präzisionsgamischanlagen und im Fall der Lagerung von äquilibrierten Eichflüssigkeiten hohe Anforderungen an die Gasdichtheit von Gebinden und Geräteanschlüssen.

Eine weitere Anforderung wird zumeist von den verwendeten Sensoren gestellt, wobei es sich üblicherweise um elektrochemische Sensoren handelt, nämlich pH-Glaselektroden und sogenannte Severinghouse-$CO_2$-Elektroden, das sind membranbedeckte Glaselektroden, in denen pH-Änderungen einer Elektrolytlösung zwischen Membran und Glaselektrode durch $CO_2$ verursacht werden. Bei Elektrolytverlust oder Austrocknung verlieren diese Sensoren ihre Funktion und sind dementsprechend vor Austrocknung zu schützen, sodaß im Falle der Eichung mit Gasen die Zusatzanforderung besteht, diese Gase mit Wasserdampf zu sättigen.

Für die Messung sehr kleiner Probenvolumina - eine wichtige Forderung nicht nur bei der Blutgasanalyse - besteht bei der Kalibrierung mit gasförmigen Medien ein weiteres Problem, nämlich insofern, als in diesem Fall für Kalibrierung und Messung unterschiedliche Analytvolumina für die Wechselwirkung mit den Sensoren zur Verfügung stehen, was je nach Sensorqualität zu Unterschieden zwischen Kalibrier- und Meßwerten bei gleichem Sollwert (Analytgehalt) führen kann.

Aufgabe der Erfindung ist es, ein Kalibrierverfahren vorzuschlagen, welches die oben angeführten Nachteile vermeidet, welches insbesondere ohne externe Gasversorgungssysteme auskommt, die zu kalibrierenden Meßelemente bzw. Meßelektroden vor dem Austrocknen schützt und auch für Meß- und Analysengeräte geeignet ist, welchen nur sehr kleine Probenvolumina zur Messung zugeführt werden.

Diese Aufgabe wird erfindungsgemäß dadurch gelöst,daß zwei lagerstabile, wäßrige Ausgangslösungen A und B unmittelbar vor der Kalibrierung in einem definierten Verhältnis vermischt werden und erst nach der chemischen Reaktion der Ausgangslösungen A und B die gewünschten pH- und $pCO_2$-Werte für die Kalibrierung der entsprechenden Meßelektroden des Meßgerätes zur Verfügung gestellt werden, wobei die Ausgangslösung A definierte Mengen der sauren Komponente eines pH-Puffersystems und die Ausgangslösung B definierte Mengen an Carbonat und Bicarbonat enthält. Die Ausgangslösungen A und B können dadurch pH- und $pCO_2$-Werte aufweisen, welche beträchtlich von den gewünschten Kalibrierwerten abweichen und auch bei Lagerung der Lösungen stabil bleiben. Die für die Kalibrierung benötigten Werte stellen sich erst nach definierter Vermischung der beiden Ausgangslösungen A und B ein. Die Stabilität der Ausgangslösung A ist somit durch ihren sauren Charakter gegeben, der eine Lösung von $CO_2$ aus der Luft nur in Spuren zuläßt, während für die Stabilität der Ausgangslösung B deren $HCO_3^-/CO_3^{2-}$-Puffersystem

verantwortlich ist.

Beide Ausgangslösungen werden durch Lagerung an Luft nicht oder nur in einem Maß beeinflußt, das für die Qualität der Kalibrierung bedeutungslos ist. Die kritische Komponente dabei ist der $CO_2$-Gehalt der Ausgangslösungen, dessen Variation nicht nur die $CO_2$- sondern auch die pH-Kalibrierwerte verändern würde.

Da flüssige Kalibriermedien verwendet werden, entfallen externe Gasversorgungssysteme und Gasmischanlagen, wobei zusätzlich für einen optimalen Schutz der Meßelektroden gesorgt ist. Die Ausgangslösungen können in herkömmlichen Kunststoffgebinden, wie PVC- oder Polyethylenflaschen gelagert werden, wobei Temperaturschwankungen von +/- 5°C zugelassen sind.

Ob die Ausgangslösung B mit oder ohne Zusatz einer weiteren basischen Komponente realisierbar ist, hängt davon ab, welche Kalibrierwerte verwirklicht werden sollen. In bestimmten Fällen ist dehalb erfindungsgemäß vorgesehen, daß die Ausgangslösung B zusätzlich die basische Komponente des pH-Puffersystems enthält. Die Ausgangslösung A enthält dabei die saure Komponente eines Puffersystems, die Losung B neben Bicarbonat und Carbonat in vorgewählter Verteilung die basische Komponente des Puffersystems.

In einer weiteren Ausgestaltung der Erfindung wird vorgeschlagen, daß in der Ausgangslösung B durch das Verhältnis von Bicarbonat zu Carbonat ein resultierender $pCO_2$-Wert eingestellt wird, der dem mittleren $pCO_2$-Wert der Umgebungsluft entspricht. Eine besonders gute Stabilität gegenüber Luft-$CO_2$-Einflüssen wird dadurch erreicht, daß das Verhältnis zwischen Bicarbonat und Carbonat - und damit der pH-Wert - entsprechend den chemischen Gleichgewichten zwischen $CO_2$ ($H_2CO_3$), $HCO_3^-$ und $CO_3^{2-}$ so gewählt wird, daß die Lösung einen $CO_2$-Wert aufweist, der dem der Luft entspricht:

$$\alpha_{CO2}.pCO_2 \longleftrightarrow H^+ + HCO_3^- \longleftrightarrow 2H^+ + CO_3^{2-}$$

Die Spezies $CO_2$, $HCO_3$ und $CO_3^{2-}$ sind gemäß diesen Gleichgewichten durch Verschiebung des pH-Wertes ineinander umwandelbar. Andererseits ist es möglich, durch definierten Einsatz der nicht flüchtigen basischen Komponenten $HCO_3^-$ und $CO_3^{2-}$ dem wäßrigen System einen pH-Wert aufzuzwingen, bei welchem die flüchtige Komponente ($CO_2$) nur in geringem Maß existent ist.

Das Puffersystem $HCO_3^-/CO_3^{2-}$ ist nunmehr wirksam und erlaubt die Einstellung eines exakt vorhersagbaren pH-Wertes im hohen pH-Bereich. Dieser pH-Wert kann wiederum so gewählt werden, daß der $CO_2$-Partialdruck der Lösung, gegeben durch die Menge der flüchtigen Komponente $CO_2$, dem $CO_2$-Partialdruck der Umgebungsluft entspricht.

Inwieweit zu erwartende $pCO_2$-Schwankungen der Umgebungsluft und Temperaturschwankungen von +/- 5°C den $CO_2$-Gehalt der Ausgangslösung B beeinflußen, zeigt folgende Abschätzung:

a) $pCO_2$-Schwankungen der Umgebungsluft
Annahmen:

| | |
|---|---|
| Luft-$CO_2$-Partialdruck: | $0,3 < pCO_2 < 0,6$ mmHg |
| Gebinde: | 500 ml PVC-Flaschen |
| | 500 ml Polyethylen-Flaschen (PE) |
| Lagerzeit: | 1 Jahr |

Ergebnisse (worst case):
0,01% $CO_2$ (für PVC) bzw. 0,02% $CO_2$ (für PE) des Gesamtgehaltes an Lösung B werden aufgenommen/abgegeben, wenn 1 Jahr lang die als Grenzwerte angegebenen Partialdrucke (0,3 bzw. 0,6 mmHg) in der Umgebung wirken.

b) Bei Temperaturschwankungen von +/- 5°C um eine angenommene Lagertemperatur von 25°C ändern sich während einjähriger Lagerung die $CO_2$-Gehalte im ungünstigsten Falle (Extremtemperaturen) wie folgt:

| | |
|---|---|
| PVC-Fläschchen | 0,006% |
| PE-Fläschchen | 0,011% |

Diese "worst case"-Änderungen des Gesamt-$CO_2$-Gehaltes in Lösung B sind meßtechnisch vernachlässigbar und vergleichsweise um einen Faktor 400 bis 1200 kleiner als Gesamt-$CO_2$-Änderungen von gasäquilibrierten Eichlösungen mit einem $pCO_2$-Wert von 40 bis 80 mmHg unter gleichen Bedingungen.

Weiters kann erfindungsgemäß vorgesehen sein, daß den Ausgangslösungen A und/oder B pH-inaktive Salze zur Anpassung der Ionenstärke an das Meßgut zugemischt werden, wobei als pH-inaktive Salze NaCl und/oder KCl verwendet werden. Es ist möglich, die Ionenstärke der beiden Ausgangslösungen durch Zusatz eines oder mehrerer Inertsalze, z. B. NaCl, KCl, auf ein beliebig vorgewähltes Niveau einzustellen. Diese Maßnahme ist dann vorteilhaft, wenn die Eigenschaften der Kalibriermedien an jene des Meßgutes angepaßt werden. Durch derartige Anpassung gelingt es beispielsweise, Diffusionspotentialunterschiede an Referenzelektroden der pH-Meßanordnung zu minimieren, die bei Nichtbeachtung zu unterschiedlichen Kalibrier- und Meßaussagen führen können.

Geeignete Puffersubstanzen, deren saure Komponente in Ausgangslösung A und deren basische Komponente in Ausgangslösung B eingesetzt ist, sind insgesamt alle Puffersysteme, die beim gewünschten Kalibrier-pH-Wert für die Kalibrierung ausreichende Pufferkapazität aufweisen. Insbesondere für Blutgasanalysen bei pH-Werten um 7 ist erfindungsgemäß vorgesehen, daß das pH-Puffersystem aus der Gruppe der Phosphatpuffer oder der wasserlöslichen organischen Aminopuffer ausgewählt wird. Als Aminopuffer eignen sich Mops, Hepes, Tris, Thrietanolamin usw.

Es wurde bereits gezeigt, daß die Ausgangslösungen A und B lagerstabil sind. Verantwortlich für die Lagerstabilität der Lösung A ist die Lage ihres pH-Wertes, z. B.: pH < 5,5. Für die Stabilität der Lösung B ist das Puffersystem $HCO_3^-/CO_3^{2-}$ verantwortlich, mit welchem pH-Werte eingestellt werden können, wodurch die Lösung einen definierbaren $CO_2$-Partialdruck aufweist. Durch Vermischung der Lösungen A und B geht die Pufferkapazität des Systems $HCO_3^-/CO_3^{2-}$ verloren; wirksam hingegen wird nunmehr das Puffersystem der zusätzlich vorhandenen Pufferkomponenten. Dieses Puffersystem im Gemisch sorgt für den gewünschten Eich-pH-Wert; durch Verschiebung des Bicarbonat/Carbonat-Gleichgewichtes entsteht beim Eich-pH-Wert der vorgewählte entsprechende Eich-$CO_2$-Partialdruck.

Eine Ausgestaltung der Erfindung sieht vor, daß zumindest eine Zweipunktkalibrierung vorgenommen wird, wobei zumindest zwei unterschiedliche Mischverhältnisse der Ausgangslösungen A, B gewählt werden. Die Konzentration der Lösungsbestandteile in A und B kann so gewählt sein, daß die gewünschten Kalibriergrößen beispielsweise für die Blutgasanalyse durch zwei verschiedene Mischungsverhältnisse realisierbar sind, wobei die beiden Ausgangslösungen gleich bleiben. Gewohnte Kalibrierwerte bei der Blutgasanalyse sind: pH = 7,383 und 6,841 bzw.p$CO_2$: 40 und 80 mmHg.

Eine besondere Vereinfachung wird dadurch erreicht, daß als Mischungsverhältnis erstens x:y und zweitens y:x, beispielsweise 1:2 und 2:1 gewählt wird. Damit können Kalibriermeßpaare einfach durch Umkehren des Mischungsverhältnisses der Ausgangslösungen im Bereich der bisher gewohnten Kalibrierwerte realisiert werden. Obwohl vom Kalibrierverfahren keine Forderung danach besteht, können durch die Wahl komplizierterer Mischverhältnisse die gewohnten Kalibrierwerte beliebig genau erreicht werden.

Für das Mischungsverhältnis A:B = 1:2 werden untenstehend die chemischen Vorgänge beschrieben:

Konzentrationen der beteiligten Komponenten (Einwaage) in den Ausgangslösungen A und B

Lösung A:     [HP] = eingesetzte Konzentrationen (z.B.
           Mol/l) an Puffersäure

Lösung B:     $[P^-]$ = eingesetzte Konzentration an
           Pufferbase

           $[HCO_3^-]$ = eingesetzte Konzentration an
           Bicarbonat

           $[CO_3^{2-}]$ = eingesetzte Konzentration an Carbonat

Die Konzentrationen im Gemisch bei einem Mischungsverhältnis A:B = 1:2 vor Einstellung des chemischen Gleichgewichts lauten: $1/3[HP]$, $2/3[P^-]$, $2/3[HCO_3^-]$, $2/3[CO_3^{2-}]$

Einstellung des chemischen Gleichgewichts:

1. Teilschritt:

$$HP + CO_3^{2-} \rightarrow P^- + HCO_3^-:$$

Das vorhandene Carbonat wird mit einem
Teil der Puffersäure umgesetzt.

Resultierende Konzentrationen nach dem 1. Teilschritt:

$[HP^*]$ = $1/3[HP]$ - $2/3[CO_3^{2-}]$
$[P^{-*}]$ = $2/3[P^-]$ + $2/3[CO_3^{2-}]$
$[HCO_3^{-*}]$ = $2/3[HCO_3^-]$ + $2/3[CO_3^{2-}]$
$[CO_3^{2-*}]$ = 0 (vernachlässigbar klein)

Wenn beispielsweise die Konzentration der Puffersäure [HP] in der Ausgangslösung A 51 mmol/l und die Carbonatkonzentration $[CO_3^{2-}]$ 9 mmol/l beträgt, gelten bei einem Mischungsverhältnis von A:B = 1:2 vor dem Einstellen des chemischen Gleichgewichtes folgende Konzentrationen: 1/3 [HP] = 17 mmol/l und 2/3 [$CO_3^{2-}$] = 6 mmol/l. Die nach dem 1. Teilschnitt resultierende Konzentration HP* = 1/3 [HP] -2/3 [$CO_3^{2-}$] beträgt dann 11 mmol/l wenn man annimmt, daß die $CO_3^{2-}$-Konzentration vernachlässigbar klein ist.

2. Teilschritt:

$$HP + HCO_3^- \rightarrow P^- + H_2CO_3 \; (= \alpha_{CO2} \cdot pCO_2)$$

Ein weiterer Teil der Puffersäure wird mit Bicarbonat umgesetzt. Diese Reaktion läuft bis zum Gleichgewicht, ohne daß eine der Komponenten vollständig verbraucht wird und kann mathematisch aus den Puffergleichungen für die Puffersysteme $HP/P^-$ und $H_2CO_3/HCO_3^-$ quantifiziert werden:

$$pH = pK_{HP} + \log \frac{(P^{-*}) + x}{(HP^*) - x}$$

$$x = \alpha_{CO2} \cdot pCO_2$$

$$pH = pK_s + \log \frac{(HCO_3^{-*}) - x}{x}$$

Aus den zwei Gleichungen mit zwei Unbekannten ergeben sich die pH- und $pCO_2$-Werte des Gemisches im Gleichgewicht.

$pK_{HP}$: neg. dekad. Logarithmus der Dissoziationskonstante von [HP]

$pK_S$: neg. dekad. Logarithmus der "scheinbaren Dissoziationskonstante" der Kohlensäure

$\alpha_{CO2}$: Löslichkeitskoeffizient von $CO_2$

Folgende Tabelle vergleicht eingesetzte Konzentrationen der Lösungsbestandteile mit Gleichgewichtskonzentrationen nach Vermischen der Lösungen A und B für den Fall eines Mischungsverhältnisses 1:2.

| | Konzentrationen in Ausgangslösungen | Konzentrationen im 1 : 2 Gemisch |
|---|---|---|
| Puffersäure (HP) | [HP] in Lösung A | 1/3 [HP] - 2/3 [$CO_3^{2-}$] - x |
| Pufferbase ($P^-$) | [$P^-$] in Lösung B | 2/3 [$P^-$] + 2/3 [$CO_3^{2-}$] + x |
| Bicarbonat | [$HCO_3^-$] in Lösung B | 2/3 [$HCO_3^-$]+2/3 [$CO_3^{2-}$] - x |
| Carbonat | [$CO_3^{2-}$] in Lösung B | annähernd = 0 für pH = 7 |
| $H_2CO_3$ $\left.\begin{array}{c} \\ (\alpha_{CO2} \cdot pCO_2) \end{array}\right\}$ $pCO_2$ | $pCO_2 = (pCO_2)_{Luft}$ | $x = \alpha_{CO2} \cdot pCO_2$ |

[$P^-$] muß nicht zwangsläufig eingesetzt sein, da sich die Pufferbase beim Vorgang der Vermischung durch Gleichgewichts-einstellung in definiertem Ausmaß aus der korrespondierenden Puffersäure bildet. Lösung B kann demnach auch lediglich aus $HCO_3^-$ und $CO_3^{2-}$ (in Wasser) zusammengesetzt sein.

Eine vorteilhafte Weiterbildung der Erfindung sieht vor, daß einer der Ausgangslösungen ein Farbstoff zugemischt wird und daß das Mischverhältnis der Ausgangslösungen mittels optischer Methoden, beispielsweise durch Absorptionsmessungen, kontrolliert wird. Als Kontrollmöglichkeit für alle denkbaren Mischverfahren bietet sich das Versetzen einer der beiden Ausgangslösungen mit einem Farbstoff an. Die Abnahme der Konzentration entsprechend den Mischungsverhältnissen kann z. B. in einer Durchflußküvette bestimmt werden (Lambert Beer'sches Gesetz). Von besonderem Vorteil dabei ist die Möglichkeit einer internen Eichung durch Messung des gefärbten Gemisches und der unvermischten Lösungen.

**BEISPIELE**

| Zusammensetzung | | [mmol/l] | | Mischungs verhältnis A : B | resultierende Kalibrierwerte | |
|---|---|---|---|---|---|---|
| Lösung A | | Lösung B | | | pH | pCO₂ |
| KH₂PO₄ | 51,5 | Na₂HPO₄ | 50,05 | 1 : 2 | 7,383 | 40,0 |
| NaCl | 20,0 | KHCO₃ | 27,65 | 2 : 1 | 6,709 | 82,1 |
| | | Na₂CO₃ | 8,40 | 3 : 2 | 6,832 | 77,8 |
| KH₂PO₄ | 23,8 | KHCO₃ | 25,3 | 1 : 2 | 7,383 | 36,8 |
| NaCl | 125,0 | Na₂CO₃ | 7,7 | 2 : 1 | 6,540 | 97,3 |
| | | NaCl | 110,0 | 1 : 1 | 6,865 | 81,0 |
| MOPS (freie Säure) | 50,0 | NaMoPS | 35,5 | 1 : 2 | 7,382 | 39,0 |
| | | KHCO₃ | 26,8 | 2 : 1 | 6,696 | 80,6 |
| | | Na₂CO₃ | 8,1 | 3 : 2 | 6,822 | 76,3 |
| NaCl | 100,0 | NaCl | 100,0 | | | |

Es ist natürlich auch möglich, einer der Ausgangslösungen andere chemische oder physikalische Marker, beispielsweise Fluoreszenzlöscher oder radioaktiv markierte Stoffe beizumischen.

Aus untenstehender Tabelle geht hervor, daß Abweichungen vom idealen Kalibriersollwert bei Abweichungen vom idealen Mischungsverhältnis beim erfindungsgemäßen Kalibrierverfahren sehr gering sind.

| A:B (ideal) | pH (ideal) | pCO₂ (ideal) | Mischfehler | pH | pCO₂ |
|---|---|---|---|---|---|
| 1:2 | 7,382 | 38,46 | 0 | 0 | 0 |
| | | | 0,5% | < ± 0,004 | < 0.21mmHg |
| | | | 1,0% | < ± 0,007 | < 0,41mmHg |
| | | | 2,0% | < 0,013 | < 0,83mmHg |
| 2:1 | 6,697 | 79,63 | 0 | 0 | 0 |
| | | | 0,5% | < 0,003 | < 0,06mmHg |
| | | | 1,0% | < 0,005 | < 0,10mmHg |
| | | | 2,0% | < 0,010 | < 0,20mmHg |

Bei vielen Analysen vor allem im biologischen Bereich ist auch der Sauerstoffpartialdruck $pO_2$ der zu messenden Medien von Interesse. Erfindungsgemäß ist demnach vorgesehen, daß eine der Ausgangslösungen A und B unmittelbar vor der Kalibrierung mit Sauerstoff der Umgebungsluft äquilibriert wird, sodaß auch für Sauerstoff ein externer Gasanschluß entfällt und zusätzlich zur pH- und $pCO_2$-Kalibrierung eine $pO_2$-Kalibrierung durchgeführt wird.

Es kann dabei erfindungsgemäß die Äquilibrierung der Ausgangslösungen A oder B mit Sauerstoff in einem Siliconschlauchstück zwischen dem jeweiligen Vorratsbehälter der Ausgangslösungen und den entsprechenden Meßelektroden durchgeführt werden. Die Äquilibrierung der Ausgangslösungen A oder B des $CO_2$/pH-Kalibriersystems mit Umgebungsluft kann dabei ohne Thermostatisierung aber mit Temperaturkontrolle des Äquilibriervorganges erfolgen, wobei dann ohne Gasaustausch auf $T_M$ (Meß- bzw. Kalibriertemperatur) erwärmt wird.

$$(cO_2)_{T1} = \alpha_{O2.T1} \cdot (pO_2)_{Umgebung}$$

$$(pO_2)_{TM} = \frac{(cO_2)_{T1}}{\alpha_{O2,TM}}$$

$$(pO_2)_{Umgebung} = (p - p_{H2O.T1}) \cdot 0,209$$

$cO_2$ : Konzentration an gelöstem Sauerstoff

pO$_2$     : Sauerstoffpartialdruck

p       : Luftdruck

$\alpha_{O2}$     : Löslichkeitskoeffizient von Sauerstoff


$$\alpha_{O2} = f(T)$$


T$_1$      : Äquilibriertemperatur

pH$_2$     O : Wasserdampfdruck

Es ist natürlich auch möglich, die Äquilibrierung direkt bei der Meßtemperatur, beispielsweise bei 37°C, vorzunehmen und die Lösung dementsprechend zu thermostatisieren.

Schließlich kann beispielsweise die Ausgangslösung A bei Temperaturen > 37°C mit Umgebungsluft äquilibriert werden. Entsprechend der Temperaturunabhängigkeit der Sauerstofflöslichkeit können dabei für Eichvorgänge bei 37°C Sauerstoffpartialdrucke realisiert werden, die kleiner als der O$_2$-Luftpartialdruck sind. Z. B. bei einem pO$_2$-Wert der Umgebungsluft von 155 mmHg und einer Äquilibrierung bei 43,5°C kann nach Abkühlen ohne Gasaustausch auf 37°C ein pO$_2$-Wert von 140,4 mmHg bei 37°C erreicht werden.

Die Sauerstoffeichung kann natürlich auch mit Hilfe einer anderen im Meßgerät vorhandenen Flüssigkeit durchgeführt werden, z. B. durch Äquilibrierung der Waschflüssigkeit mit Sauerstoff. Als Ort der Äquilibrierung eignet sich beispielsweise ein beheizter Siliconschlauch mit innenliegendem, isoliertem Heizdraht und vorzugsweise mehreren Temperatursensoren, die für Regelungszwecke herangezogen werden können.

Der Umgebungsluftstrom zur O$_2$-Äquilibrierung bei der jeweiligen Temperatur kann mit Wasserdampf gesättigt sein, um Konzentrationsveränderungen der Lösung zu vermeiden.

Es ist auch möglich, daß die Ausgangslösung A direkt in ihrem Vorratsgefäß mit Umgebungsluft äquilibriert wird, da aufgrund des sauren Charakters der Lösung A keine detektierbaren Auswirkungen auf das pH/pCO$_2$-Kalibriersystem zu erwarten sind.

Falls es in speziellen Kalibrierverfahren notwendig ist, den pO$_2$-Nullpunkt in die Kalibrierung einzubeziehen, kann erfindungsgemäß aus einer der Ausgangslösungen A oder B der Sauerstoff durch eine kathodische Reaktion eliminiert werden. In einfacher Weise kann ein Verfahren zur elektrochemischen Sauerstoffentfernung so arbeiten, daß eine mit großflächigen Kathoden ausgestattete Durchflußzelle am Transportweg oder einem Bypass vor der Meßkammer eingebaut ist. Die Kathode kann beispielsweise als blanker Platindraht längs eines Schlauchstückes oder eines anodischen Rohrstückes gestaltet sein. Ein derartiges System funktioniert entsprechend den polarographischen Sauerstoffelektroden. Nach Anlegen einer Spannung erfolgt die kathodische Umsetzung des Sauerstoffes, wobei der auftretende Strom ein Maß für den O$_2$-Umsatz an der Kathode ist. Damit besteht die Möglichkeit, entweder die Vollständigkeit des Umsatzes zu kontrollieren oder die Reaktion nicht bis zum vollständigen Sauerstoffverbrauch ablaufen zu lassen und den Stromwert als Maß für den vorhandenen Restsauerstoffgehalt heranzuziehen. Interner Kalibrierwert dieses Systems kann beispielsweise der Strom zum Beginn der Reaktion einer luftäquilibrierten Lösung sein. Mehrpunktseichungen sind durch dieses Verfahren möglich, ein anaerober Transport zum Meßsystem ist jedoch erforderlich.

Es ist erfindungsgemäß auch möglich, daß zur Kalibrierung des pO$_2$-Nullpunktes eine Lösung C, vorzugsweise eine Waschlösung, herangezogen wird, die einen Sauerstoffverbraucher, beispielsweise Na$_2$SO$_3$ enthält. Weitere solche Substanzen sind beispielsweise Natriumdithionit und Pyrogallol im Überschuß in wäßrigen Lösungen, durch welche molekularer Sauerstoff reduziert wird. Da die genannten Reaktionen im basischen Milieu ablaufen, ist es sinnvoll, die Lösung C mit vorzugsweise nicht ionischen Tensiden zu versetzen und sie gleichzeitig als Reinigungslösung zu verwenden. Na$_2$SO$_3$ wird dabei bevorzugt, da bei Reaktion mit Sauerstoff ein stabiles Reaktionsprodukt entsteht.

Eine Kontrollmöglichkeit zur Sicherstellung der Sauerstoff-Freiheit ist erfindungsgemäß dadurch gegeben, daß der Sauerstoffgehalt, der zur Kalibrierung des pO$_2$-Nullpunktes verwendeten Lösung C, durch Zugabe eines Redoxindikators kontrolliert wird, welcher beim Übergang vom oxidierten zum reduzierten Zustand einen Farbumschlag aufweist. Es bieten sich dabei Redoxindikatorsubstanzen an, die im oxidierten und reduzierten Zustand unterschiedliche Farben aufweisen. Solange die O$_2$-verbrauchende Substanz anwesend ist, liegt dabei der Indikator in seiner reduzierten Form vor, sobald O$_2$ anwesend ist erfolgt dr Farbumschlag des Indikators. Beispiele dafür sind Pyrogallol als Indikator, welcher sich nach Umsatz mit O$_2$ braun verfärbt, bzw. organische Redoxfarbstoffe.

Schließlich bietet sich erfindungsgemäß eine weitere Überwachungsmöglichkeit des O$_2$-Gehaltes dadurch, daß bei der Anwendung von Na$_2$SO$_3$ als Sauerstoffverbraucher der Sauerstoffgehalt der zur Kalibrierung des pO$_2$-Nullpunktes verwendeten Lösung C durch Zugabe eines pH-Indikators kontrolliert wird, welcher bei der Verschiebung des pH-Wertes der Lösung C von 9 auf 7 einen Farbumschlag aufweist. Eine Kontrollmöglichkeit für die Beobachtung der Sauerstoff-Freiheit mit Hilfe des $SO_3^-$-Verbrauches bietet sich durch den Zusatz eines pH-Indikators mit einem Umschlagspunkt zwischen pH = 7 und pH = 9 an, da die Oxidation von Sulfit zu Sulfat mit einer Verschiebung des pH-Wertes der Lösung von pH~9 auf pH~7 verbunden ist. Solche Indikatoren sind ebenfalls aus der Literatur bekannt, z.B. Cresol-rot oder Neutral-rot.

Eine erfindungsgemäße Anordnung zur Durchführung des Verfahrens nach der Erfindung zur Kalibrierung eines Meß- oder Analysengerätes mit einem Meßelement mit Meßelektroden zur Bestimmung des pH-, des $pCO_2$- und ggf. des $pO_2$-Wertes mit Behältern für Wasch-, Kalibrier- und Referenzmedien sowie mit einer Kalibriervorrichtung ist dadurch gegeben, daß die Kalibriervorrichtung zumindest zwei Vorratsbehälter für flüssige Ausgangslösungen A und B aufweist, sowie daß eine Dosiervorrichtung vorhanden ist, welche die Ausgangslösungen vor Eintritt in das Meßelement in einem definierten Verhältnis mischt.

Von Vorteil für die Erfindung ist es, wenn anschließend an die Dosiervorrichtung eine Mischkammer vorgesehen ist, welche ggf. eine Mischvorrichtung, vorzugsweise einen Magnetrührer, aufweist.

Eine besonders einfache Ausführung der erfindungsgemäßen Anordnung ist dadurch gegeben, daß die Dosiervorrichtung zwei über eine Pumpe, vorzugsweise eine Schlauchpumpe geführte Schlauchstücke mit unterschiedlichen Querschnitten aufweist, welche einerseits mit je einem Vorratsbehälter und andererseits mit der Mischkammer in Verbindung stehen.

Für Zweipunkt-Kalibrierungen, bei welchen zwei Mischlösungen durch Umkehren der Mischverhältnisse der beiden Ausgangslösungen A und B erzeugt werden, ist es erfindungsgemäß von Vorteil, daß drei über eine Pumpe, vorzugsweise eine Schlauchpumpe geführte Schlauchstücke vorhanden sind, wobei das erste Schlauchstück mit dem einen Vorratsbehälter und das zweite mit dem anderen Vorratsbehälter verbunden ist, daß das dritte Schlauchstück über eine Schaltvorrichtung abwechselnd mit einem der Vorratsbehälter verbindbar ist, sowie daß alle Schlauchstücke in die Mischkammer führen. Dabei ist es von besonderem Vorteil, wenn die drei Schlauchstücke zur Realisierung der Mischverhältnisse 1:2 und 2:1 den gleichen Querschnitt aufweisen.

Schließlich ist es in einer weiteren Ausgestaltung der Erfindung möglich, daß die Dosiervorrichtung für jede der Ausgangslösungen A und B je eine Kolbenspritze aufweist, wobei die je mit einem Vorratsbehälter verbundenen Kolbenspritzen unterschiedliche Kolbendurchmesser oder unterschiedliche Hubhöhen aufweisen. Vor dem Meßelement des Analysengerätes kann auch in diesem Fall eine Mischkammer angeordnet werden.

Die Erfindung wird im folgenden anhand von zum Teil schematischen Ausführungsbeispielen näher erläutert. Es zeigen:

Fig. 1    eine Anordnung zur Durchführung des erfindungsgemäßen Kalibrierverfahrens und

Fig. 2    bis 4 andere Ausgestaltungen dieser Anordnung.

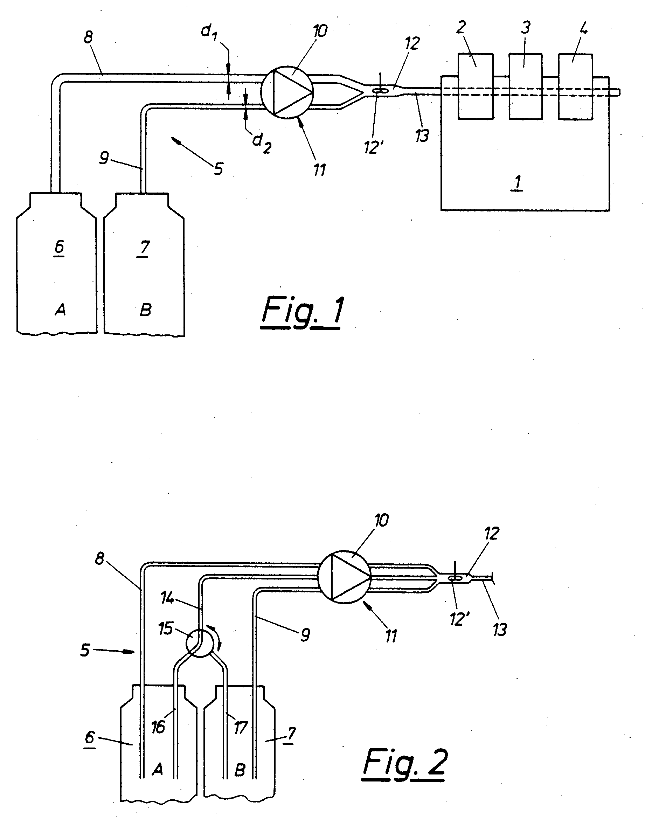

In Fig. 1 ist ein Meß- oder Analysengerät mit einem Meßelement 1 und darin angeordneten Meßelektroden 2,3 und 4, beispielsweise für pH-, $CO_2$-, $O_2$-Messungen dargestellt. Während der Kalibrierung des Meßgerätes 1 mit Hilfe der Kalibriervorrichtung 5 werden die Ausgangslösungen A und B aus den Vorratsbehältern 6 und 7 über Schlauchstücke 8 und 9 mittels der Schlauchpumpe 10 als Dosiervorrichtung 11 in eine Mischkammer 12 gefördert und mit einer ggf. dort angeordneten Mischvorrichtung 12′ vermischt. Das Gemisch gelangt anschließend über das Schlauchstück 13 zu den einzelnen Meßelektroden 2, 3 und 4 des Meßelementes 1. Durch die Querschnitte $d_1$ und $d_2$ wird das benötigte Mischungsverhältnis vorgegeben.

In der in Fig. 2 dargestellten Anordnung ist neben den Schlauchstücken 8 und 9 ein drittes Schlauchstück 14 vorgesehen, welches mit Hilfe einer Schaltvorrichtung 15 abwechselnd mit den Vorratsbehältern 6 und 7 über Schlauchstücke 16 und 17 in Verbindung treten kann. Bei Auswahl von gleichen Querschnitten für alle drei Schlauchstücke 8, 9 und 14 kann durch Umschalten der Schaltvorrichtung 15 das Mischverhältnis von 1:2 auf 2:1 umgestellt werden.

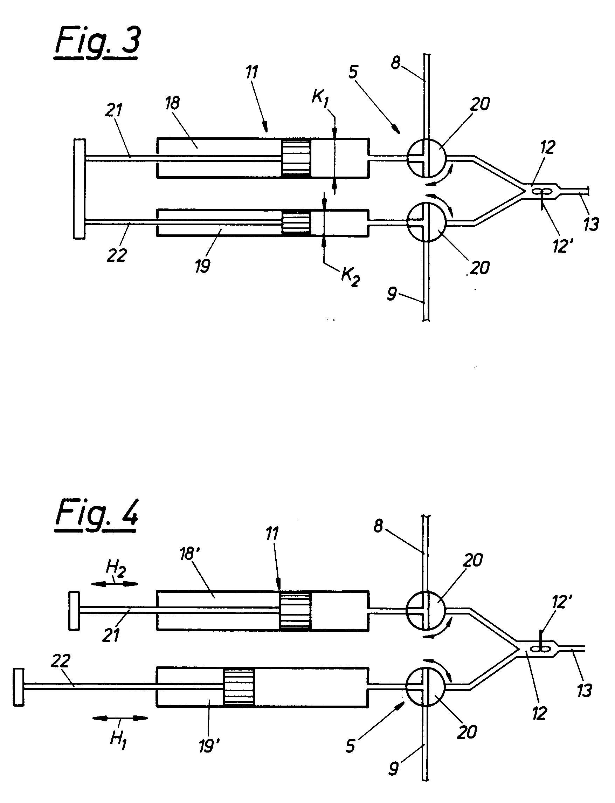

Fig. 3 zeigt eine weitere Ausgestaltung, bei der das Mischverhältnis sehr genau mit Hilfe zweier Kolbenspritzen 18 und 19 eingestellt werden kann. Die Kolbenspritzen sind jeweils mit Ventilen 20 ausgestattet, welche zwischen Saug- und Pumphub umgeschaltet werden. Durch den unterschiedlichen Querschnitt $K_1$ bzw. $K_2$ der beiden Kolbenspritzen 18 und 19 wird das Mischungsverhältnis definiert.

Es ist natürlich auch möglich, wie in Fig. 4 dargestellt, bei gleichen Querschnitten der Kolben 18′ und 19′ unterschiedliche Hubhöhen $H_1$ und $H_2$ vorzusehen. Die beiden Kolben 21, 22, die in der Ausführung nach Fig. 3 über einen gemeinsamen Antrieb verfügen, werden in Fig. 4 unabhängig voneinander, beispielsweise durch hier nicht dargestellte Schrittmotoren, angetrieben.

**Patentansprüche**

1. Verfahren zum Kalibrieren eines Meßgerätes, welches zumindest den pH- und den $pCO_2$-Wert in wäßrigen Medien bestimmt, **dadurch gekennzeichnet**, daß zwei lagerstabile, wäßrige Ausgangslösungen A und B unmittelbar vor der Kalibrierung in einem definierten Verhältnis vermischt werden und erst nach der chemischen Reaktion der Ausgangslösungen A und B die gewünschten pH- und $pCO_2$-Werte für die Kalibrierung der entsprechenden Meßelektroden des Meßgerätes zur Verfügung gestellt werden, wobei die Ausgangslösung A definierte Mengen der sauren Komponente eines pH-Puffersystems und die Ausgangslösung B definierte Mengen an Carbonat und Bicarbonat enthält.

2. Verfahren nach Anspruch 1, dadurch gekennzeichnet, daß die Ausgangslösung B zusätzlich die basische Komponente des pH-Puffersystems enthält.

3. Verfahren nach Anspruch 1 oder 2, dadurch gekennzeichnet, daß in der Ausgangslösung B durch das Verhältnis von Bicarbonat zu Carbonat ein resultierender $pCO_2$-Wert eingestellt wird, der dem mittleren $pCO_2$-Wert der Umgebungsluft entspricht.

4. Verfahren nach einem der Ansprüche 1 bis 3, dadurch gekennzeichnet, daß den Ausgangslösungen A und/oder B pH-inaktive Salze zur Anpassung der Ionenstärke an das Meßgut zugemischt werden.

5. Verfahren nach Anspruch 4, dadurch gekennzeichnet, daß als pH-inaktive Salze NaCl und/oder KCl verwendet werden.

6. Verfahren nach einem der Ansprüche 1 bis 5, dadurch gekennzeichnet, daß das pH-Puffersystem aus der Gruppe der Phosphatpuffer oder der wasserlöslichen organischen Aminopuffer ausgewählt wird.

7. Verfahren nach einem der Ansprüche 1 bis 6, dadurch gekennzeichnet, daß zumindest eine Zweipunktkalibrierung vorgenommen wird, wobei zumindest zwei unterschiedliche Mischverhältnisse der Ausgangslösungen A, B gewählt werden.

8. Verfahren nach Anspruch 7, dadurch gekennzeichnet, daß als Mischungsverhältnis erstens x:y und zweitens y:x, beispielsweise 1:2 und 2;1, gewählt wird.

9. Verfahren nach einem der Ansprüche 1 bis 8, dadurch gekennzeichnet, daß einer der Ausgangslösungen A oder B ein Farbstoff zugemischt wird und daß das Mischverhältnis der Ausgangslösungen mittels optischer Methoden, beispielweise durch Absorptionsmessungen, kontrolliert wird.

10. Verfahren nach einem der Ansprüche 1 bis 9, dadurch gekennzeichnet, daß eine der Ausgangslösungen A und B unmittelbar vor der Kalibrierung mit Sauerstoff der Umgebungsluft äquilibriert wird und zusätzlich zur pH- und $pCO_2$-Kalibrierung eine $pO_2$-Kalibrierung durchgeführt wird.

11. Verfahren nach Anspruch 10, dadurch gekennzeichnet, daß die Äquilibrierung der Ausgangslösungen A oder B mit Sauerstoff in einem Siliconschlauchstück zwischen dem jeweiligen Vorratsbehälter der Ausgangslösungen und den entsprechenden Meßelektroden durchgeführt wird.

12. Verfahren nach Anspruch 10 oder 11, dadurch gekennzeichnet, daß. zur Kalibrierung des pO2-Nullpunktes aus einer der Ausgangslösungen A oder B der Sauerstoff durch eine kathodische Reaktion eliminiert wird.

13. Verfahren nach Anspruch 10 oder 11, dadurch gekennzeichnet, daß zur Kalibrierung des $pO_2$-Nullpunktes eine Lösung C, vorzugsweise eine Waschlösung, herangezogen wird, die einen Sauerstoffverbraucher, beispielsweise $Na_2SO_3$, enthält.

14. Verfahren nach Anspruch 13, dadurch gekennzeichnet, daß der Sauerstoffgehalt der zur Kalibrierung des $pO_2$-Nullpunktes verwendeten Lösung C durch Zugabe eines Redoxindikators kontrolliert wird, welcher beim Übergang vom oxidierten zum reduzierten Zustand einen Farbumschlag aufweist.

**15.** Verfahren nach Anspruch 13, dadurch gekennzeichnet, daß bei der Anwendung von $Na_2SO_3$ als Sauerstoffverbraucher der Sauerstoffgehalt der zur Kalibrierung des $pO_2$-Nullpunktes verwendeten Lösung C durch Zugabe eines pH-Indikators kontrolliert wird, welcher bei der Verschiebung des pH-Wertes der Lösung C von 9 auf 7 einen Farbumschlag aufweist.

**16.** Anordnung zur Durchführung des Verfahrens nach einem der Ansprüche 1 bis 15, für ein Meß- oder Analysengerät mit einem Meßelement mit Meßelektroden zur Bestimmung des pH-, des $pCO_2$- und ggf. des $pO_2$-Wertes mit Behältern für Wasch-, Kalibrier- und Referenzmedien, sowie mit einer Kalibriervorrichtung, dadurch gekennzeichnet, daß die Kalibriervorrichtung (5) zumindest zwei Vorratsbehälter (6, 7) für flüssige Ausgangslösungen A und B aufweist, sowie daß eine Dosiervorrichtung (11) vorhanden ist, welche die Ausgangslösungen vor Eintritt in das Meßelement (1) in einem definierten Verhältnis mischt.

**17.** Anordnung nach Anspruch 16, dadurch gekennzeichnet, daß anschließend an die Dosiervorrichtung (11) eine Mischkammer (12) vorgesehen ist, welche ggf. eine Mischvorrichtung (12'), vorzugsweise einen Magnetrührer, aufweist.

**18.** Anordnung nach Anspruch 17, dadurch gekennzeichnet, daß die Dosiervorrichtung (11) zwei über eine Pumpe, vorzugsweise eine Schlauchpumpe (10), geführte Schlauchstücke (8, 9) mit unterschiedlichen Querschnitten ($d_1$ und $d_2$) aufweist, welche einerseits mit je einem Vorratsbehälter (6, 7) und andererseits mit der Mischkammer (12) in Verbindung stehen.

**19.** Anordnung nach Anspruch 17, dadurch gekennzeichnet, daß drei über eine Pumpe, vorzugsweise eine Schlauchpumpe (10) geführte Schlauchstücke (8, 9, 14) vorhanden sind, wobei das erste Schlauchstück (8) mit dem einen Vorratsbehälter (6) und das zweite (9) mit dem anderen Vorratsbehälter (7) verbunden ist, daß das dritte Schlauchstück (14) über eine Schaltvorrichtung (15) abwechselnd mit einem der Vorratsbehälter (6, 7) verbindbar ist, sowie daß alle Schlauchstücke (8, 9, 14) in die Mischkammer (12) führen.

**20.** Anordnung nach Anspruch 19, dadurch gekennzeichnet, daß die drei Schlauchstücke (8, 9, 14) zur Realisierung der Mischverhältnisse 1:2 und 2:1 den gleichen Querschnitt aufweisen.

**21.** Anordnung nach Anspruch 16 oder 17, dadurch gekennzeichnet, daß die Dosiervorrichtung (11) für jede der Ausgangslösungen A und B je eine Kolbenspritze (18, 19; 18', 19') aufweist, wobei die je mit einem Vorratsbehälter (6, 7) verbundenen Kolbenspritzen (18, 19; 18', 19') unterschiedliche Kolbendurchmes- ser ($K_1$, $K_2$) oder unterschiedliche Hubhöhen ($H_1$, $H_2$) aufweisen.

**Claims**

**1.** Method of calibrating measuring apparatus which determines at least the pH and $pCO_2$ values in aqueous media, characterised in that two aqueous starting solutions A and B of good storage stability, are mixed in a defined ratio immediately before calibration, and the desired pH and $pCO_2$ values for calibration of the respective measuring electrodes of the measuring apparatus are made available only after chemical reaction of the starting solutions A and B has taken place, the starting solution A containing defined quantities of the acid component of a pH buffer system, and the base solution B containing defined quantities of carbonate and bicarbonate.

**2.** Method according to claim 1, characterised in that the starting solution B additionally contains the basic component of the pH buffer system.

**3.** Method according to claim 1 or 2 characterised in that a $pCO_2$ value resulting from the ratio of bicarbonate to carbonate is obtained in starting solution B, which corresponds to the mean $pCO_2$ value of the ambient air.

**4.** Method according to one of claims 1 to 3, characterised in that pH-inactive salts are added to the starting solutions A and/or B, in order to match the ionic strength to the sample.

**5.** Method according to claim 4, characterised in that $NaCl$ and/or $KCl$ are used as pH-inactive salts.

**6.** Method according to one of claims 1 to 5, characterised in that pH buffer system is selected from the group of phosphate buffers or the water-soluble organic amino buffers.

**7.** Method according to any of claims 1 to 6, characterised in that at least a two-point calibration is carried out, for which at least two different mixing ratios of the starting solutions A, B are selected.

**8.** Method according to claim 7, characterised in that the selected mixing ratio is x : y in the first place and y : x in the second place, for example, 1 : 2 and 2 : 1.

**9.** Method according to one of claims 1 to 8, characterised in that a dye is added to one of the starting solutions A or B and that the mixing ratio of the starting solutions is tested by means of optical methods, for example by absorption measurements.

**10.** Method according to one of claims 1 to 9, characterised in that one of the starting solutions A and B is equilibrated with oxygen from the ambient air immediately before the calibration, and a $pO_2$ calibration is carried out in addition to pH and $pCO_2$ calibrations.

**11.** Method according to claim 10, characterised in that the equilibration of the starting solutions A or B with oxygen is performed in a piece of silicone tubing between the storage containers of the respective starting solution and the corresponding measuring electrodes.

**12.** Method according to claim 10 or 11, characterised in that for calibration of the $pO_2$ zero point the oxygen is removed from one of the starting solutions A and B by a cathodic reaction.

**13.** Method according to claim 10 or 11, characterised in that calibration of the $pO_2$ zero point a solution C is used, preferably a washing solution, which contains an oxygen reducing agent, for example $Na_2SO_3$.

**14.** Method according to claim 13, characterised in that the oxygen content of the solution C used for calibration of the $pO_2$ zero point is monitored by adding a redox indicator which undergoes a colour change upon transition from the oxidized to the reduced condition.

**15.** Method according to claim 13, characterised in that, when $Na_2SO_3$ is used as an oxygen-reducing agent the oxygen content of the solution C used for calibration of the $pO_2$ zero point is checked by adding a pH indicator which undergoes a change in colour if the pH of the solution C shifts from 9 to 7.

**16.** Arrangement for carrying out the method according to any of claims 1 to 15, for measurement or analyzing apparatus comprising a measuring element with measuring electrodes for determining the pH, $pCO_2$ and, if applicable, the $pO_2$ values, with containers for washing, calibrating and reference media, as well as a calibration device, characterised in that the calibration device (5) is furnished with two or more storage containers (6,7) for liquid starting solutions A and B, and also that a metering device (11) is provided for mixing the starting solutions in a defined ratio before they enter the measuring element (1).

**17.** Arrangement according to claim 16, characterised in that the metering device (11) is followed by a mixing chamber (12), which may be equipped with a mixing device (12'), preferably a magnetic stirrer.

**18.** Arrangement according to claim 17, characterised in that the metering device (11), has two pieces of tubing (8,9) of different cross-sections ($d_1$ and $d_2$) served by a pump, preferably a peristaltic pump (10), each of which pieces is connected to a storage container (6,7) on the one hand and to the mixing chamber (12) on the other hand.

**19.** Arrangement according to claim 17, characterised in that three pieces of tubing (8,9,14) are provided, preferably via a peristaltic pump (10), the first piece (8) being connected to the one storage container (6) and the second piece (9) to the other storage container (7), that the third piece of tubing (14) can be connected to each of the containers (6,7) in turn via a switching unit (15), and that all pieces of tubing (8,9,14) lead into the mixing chamber (12).

**20.** Arrangement according to claim 19, characterised in that the three pieces of tubing (8,9,14) have identical cross-sections for establishing the mixing ratios 1:2 and 2:1.

**21.** Arrangement according to claim 16 or 17, characterised in that metering device (11) is provided with a syringe (18,19; 18',19') for each of the starting solutions A and B, the syringes (18,19; 18',19') each connected to a storage container (6,7) having different plunger diameters ($K_1$, $K_2$) or different stroke lengths ($H_1$, $H_2$).

**Revendications**

**1.** Procédé de calibrage d'un dispositif de mesure, qui détermine au moins la valeur du pH et celle du $pCO_2$ dans des milieux aqueux, procédé caractérisé en ce que deux solutions de départ A et B aqueuses stables pendant le stockage sont mélangées directement avant le calibrage dans une proportion définie et en ce qu'on dispose seulement après la réaction chimique des solutions de départ A et B des valeurs voulues du pH et du $pCO_2$ pour le calibrage des électrodes de mesure correspondantes de l'appareil de mesure, la solution de départ A contenant des quantités définies de composants acides d'un système de tamponnage de pH et la solution de départ B contenant des quantités définies de carbonate et de bicarbonate.

**2.** Procédé selon la revendication 1, caractérisé en ce que la solution de départ B contient additionnement le composant basique du système de tamponnage du pH.

**3.** Procédé selon la revendication 1 ou 2, caractérisé en ce que dans la solution de départ B est établie par la proportion de bicarbonate par rapport au carbonate une valeur résultante du $pCO_2$, qui correspond à la valeur moyenne du $pCO_2$ de l'air ambiant.

**4.** Procédé selon l'une des revendications 1 à 3, caractérisé en ce que l'on mélange des sels inactifs quand au pH aux solutions de départ A et/ou B pour ajustement de la force ionique au produit de mesure.

**5.** Procédé selon la revendication 4, caractérisé en ce que l'on peut utiliser comme sels inactifs quant au pH du NaCl et/ou du KCl.

**6.** Procédé selon l'une des revendications 1 à 5, caractérisé en ce que le système de tamponnage de pH est choisi à partir du groupe des tampons phosphatiques ou des amino-tampons organiques en solution aqueuse.

**7.** Procédé selon l'une des revendications 1 à 6, caractérisé en ce qu'on procède au moins à un calibrage en deux points, au moins deux proportions de mélange différentes des solutions de départ A, a étant choisies.

**8.** Procédé selon la revendication 7, caractérisé en ce que l'on choisit comme proportion de mélange première x:y et deuxièmement y:x, par exemple 1:2 et 2:1.

**9.** Procédé selon l'une des revendications 1 à 8, caractérisé en ce qu'à l'une des solutions de départ A ou B est mélangée une matière colorante et en ce que la proportion du mélange des solutions de départ est contrôlée au moyen de méthodes optiques, par exemple par des mesures d'absorption.

**10.** Procédé selon l'une des revendications 1 à 9, caractérisé en ce que l'une des solutions de départ A et B est équilibrée directement avant le calibrage avec de l'oxygène de l'air ambiant et en ce qu'est réalisé en plus du calibrage du pH et du $pCO_2$ un calibrage du $pO_2$.

**11.** Procédé selon la revendication 10, caractérisé en ce que l'équilibrage des solutions de départ A ou B est réalisé avec de l'oxygène dans un tronçon de tuyau en silicone entre le réservoir correspondant des solutions de départ et les électrodes correspondantes de mesure.

**12.** Procédé selon la revendication 10 ou 11, caractérisé en ce que pour le calibrage du point zéro du $PO_2$, on élimine à partir de l'une des solutions de départ A ou B l'oxygène par une réaction cathodique.

**13.** Procédé selon la revendication 10 ou 11, caractérisé en ce que pour le calibrage du point zéro du $pO_2$, on utilise une solution C, de préférence une solution de lavage, qui contient un consommateur d'oxygène, par exemple du $Na_2SO_3$.

**14.** Procédé selon la revendication 13, caractérisé en ce que la teneur en oxygène de la solution C utilisée pour le calibrage du point zéro du $PO_2$ est contrôlée par addition d'un indicateur redox, qui lors du passage de l'état oxydé à l'état réduit présente un changement de couleur.

**15.** Procédé selon la revendication 13, caractérisé en ce que lors de l'utilisation de $Na_2SO_3$ comme consommateur d'oxygène la teneur en oxygène de la solution C utilisée pour le calibrage du point zéro du $pO_2$ est contrôlée par addition d'un indicateur de pH, qui présente un changement de couleur lors du déplacement de la valeur du pH de la solution C de 9 à 7.

**16.** Arrangement pour la mise en oeuvre du procédé selon l'une des revendications 1 à 15, pour un appareil de mesure ou d'analyse avec un élément de mesure avec des électrodes de mesure pour déterminer la valeur du pH, du $pCO_2$ et le cas échéant du $pO_2$ avec des récipients pour des milieux de lavage, de calibrage et de référence, ainsi qu'avec un dispositif de calibrage, arrangement caractérisé en ce que le dispositif de calibrage (5) présente au moins deux réservoirs (6, 7) pour des solutions liquides de départ A et B, et en ce qu'il existe un dispositif de dosage (11) qui mélange les solutions de départ avant l'entrée dans l'élément de mesure (1) dans une proportion définie.

**17.** Arrangement selon la revendication 16, caractérisé en ce qu'il est prévu ensuite sur le dispositif de dosage (11) une chambre de mélange (12), qui présente le cas échéant un dispositif de mélange (12') de préférence un agitateur magnétique.

**18.** Arrangement selon la revendication 17, caractérisé en ce que le dispositif de dosage (11) présente deux tronçons des tuyaux (8, 9) passant par une pompe, de préférence une pompe tubulaire (10), avec des sections transversales différentes ($d_1$ et $d_2$), qui d'une part sont en liaison chacune à un réservoir (6, 7) et d'autre part à la chambre (12) de mélange.

**19.** Arrangement selon la revendication 17, caractérisé en ce qu'il existe trois tronçons des tuyaux (8, 9, 14) passant par une pompe, de préférence une pompe tubulaire (10), le premier tronçon de tuyau (8) étant relié à l'un des réservoirs (6) et le deuxième (9) à l'autre réservoir (7), en ce que le troisième tronçon de tuyau (14) peut être relié de façon alternative à l'un des réservoirs (6, 7), et en ce que tous les tronçons des tuyaux (8, 9, 14) arrivent à la chambre de mélange (12).

**20.** Arrangement selon la revendication 19, caractérisé en ce que les trois tronçons des tuyaux (8, 9, 14) présentent la même section transversale pour réaliser les proportions de mélange 1:2 et 2:1.

**21.** Arrangement selon la revendication 16 ou 17, caractérisé en ce que le dispositif de dosage (11) présente pour chacune des solutions de départ A et B respectivement une seringue à piston (18, 19 ; 18', 19'), les seringues à piston (18, 19 ; 18', 19') reliées respectivement à un réservoir (6, 7) présentant des diamètres de piston ($K_1$, $K_2$) différents ou des courses différentes ($H_1$, $H_2$).

_Fig. 1_

_Fig. 2_

Fig. 3

Fig. 4